# EUROPÄISCHE PATENTSCHRIFT

(11) **EP 1 351 845 B1**
(45) Veröffentlichungstag und Bekanntmachung des Hinweises auf die Patenterteilung: **01.12.2004**
(21) Anmeldenummer: 01913514.4
(22) Anmeldetag: 18.01.2001
(51) Int. Cl.: B60T 8/36

(54) **MOTOR-PUMPEN-AGGREGAT, INSBESONDERE EINE KRAFTFAHRZEUG-ANTIBLOCKIERBREMSVORRICHTUNG**
MOTOR-PUMP ASSEMBLY, IN PARTICULAR AN ANTI-LOCK BRAKING SYSTEM FOR A MOTOR VEHICLE
GROUPE MOTOPOMPE, NOTAMMENT DISPOSITIF DE FREINAGE D'ANTIBLOCAGE DES ROUES POUR VEHICULE

(43) Veröffentlichungstag der Anmeldung: 15.10.2003
(73) Patentinhaber: SIEMENS AKTIENGESELLSCHAFT, 80333 München (DE)
(72) Erfinder: HARTEL, Gerd, 97273 Kürnach (DE); TUPY, Matthias, 97218 Gerbrunn (DE)
(86) Internationale Anmeldenummer: PCT/DE2001/000204
(87) Internationale Veröffentlichungsnummer: WO 2002/057124

(56) Entgegenhaltungen:
- EP-B- 0 645 875
- WO-A-01/26945
- WO-A-94/27045
- WO-A-96/28327
- WO-A-98/16986
- WO-A-98/56630
- PATENT ABSTRACTS OF JAPAN vol. 2000, no. 08, 6. Oktober 2000 (2000-10-06) -& JP 2000 127934 A (UNISIA JECS CORP), 9. Mai 2000 (2000-05-09)
- PATENT ABSTRACTS OF JAPAN vol. 1997, no. 08, 29. August 1997 (1997-08-29) -& JP 09 098559 A (JECO CO LTD), 8. April 1997 (1997-04-08)
- PATENT ABSTRACTS OF JAPAN vol. 018, no. 076 (M-1556), 8. Februar 1994 (1994-02-08) & JP 05 288143 A (ASMO CO LTD), 2. November 1993 (1993-11-02)

## Beschreibung

Die Erfindung bezieht sich auf ein Motor-Pumpen-Aggregat, insbesondere eine Kraftfahrzeug-Antiblockierbremsvorrichtung, gemäß Patentanspruch 1.

Eine Kraftfahrzeug-Antiblockbremsvorrichtung mit dem ersten Teilmerkmal des Anspruchs 1 ist durch die EP 0 645 875 B1 bekannt; die motorgehäuseseitig elektrisch an eine Bürstenplatte angeschlossenen Versorgungs- bzw. Steuerleitungen führen durch die voreinanderliegenden Stirnflächen von Motorgehäuse und Pumpengehäuse bzw. Pumpengehäuse und Elektronikgehäuse und sind innengehäuseseitig verlegt; nach einer Ausgestaltung sind die Versorgungs- bzw. Steuerleitungen im Motorgehäuse innerhalb axialer Distanzstücke zwischen den Stirnseiten von Stator-Erregermagneten angeordnet, insbesondere eingespritzt, wobei die Distanzstücke zur Montagevereinfachung im Sinne einer selbsttätigen Steck-Kontaktierung zwischen den eingespritzten Versorgungs- bzw. Steuerleitungen und dem Anschlussteil des Elektronikgehäuses durch das Pumpengehäuse hindurch verlängert sein können.

Gemäß Aufgabe vorliegender Erfindung sollen trotz für einen Massenserienartikel vorteilhafter weiterer vereinfachter Fertigungs- und Montagetechnik mit Sicherheit Kontaktierungsschwierigkeiten zwischen den Versorgungs- bzw. Steuerleitungen einerseits und dem Anschlussteil, z.B. einer Leiterplatte, des Elektronikgehäuses beim axialen Sandwich-Zusammenbau von Motorgehäuse mit Pumpengehäuse und Pumpengehäuse mit Elektronikgehäuse vermeidbar sein.

Die Lösung dieser Aufgabe gelingt erfindungsgemäß durch ein Motor-Pumpen-Aggregat gemäß Patentanspruch 1; vorteilhafte Ausgestaltungen der Erfindung sind jeweils Gegenstand der Unteransprüche.

Durch die Fixierung der, vorzugsweise zungenartig senkrecht zu der Bürstenplatte abstehenden, steckerartigen, Versorgungs- bzw. Steuerleitungen in dem motorseitigen Sockel, insbesondere an der Bürstenplatte, sind sie mit diesem Bauteil als Vormontageeinheit fertigbar und beim Gehäusezusammenbau kontaktierbar, wobei durch die sonstige Beweglichkeit der Versorgungs- bzw. Steuerleitungen im Zusammenspiel mit der elastischen Isolierung mechanische Verspannungsbelastungen durch gegenseitige Versatztoleranzen der zusammenzubauenden und gegenseitig bzw. gegenüber den Versorgungs- bzw. Steuerleitungen abzudichtenden Gehäuse vermeidbar sind.

In weiterer Fertigungs- und Montagevereinfachung sind die Versorgungs- bzw. Steuerleitungen einstückiger Bestandteil eines von dem Sockel aufgenommenen, insbesondere eines in die Bürstenplatte eingespritzten, Stanzgitters, dass dem Anschluss weiterer Bauteile, z.B. von Entstörmitteln und insbesondere der die Rotorwicklung speisenden Bürsten, dient.

Die Erfindung sowie vorteilhafte Ausgestaltungen der Erfindung gemäß Merkmalen der Unteransprüche werden im folgenden anhand schematischer Ausführungsbeispiele in der Zeichnung näher erläutert; darin zeigen:
- FIG 1: in einem axialen Teilschnittbild ein komplett montiertes Motor-Pumpen-Aggregat;
- FIG 2: als Vormontage-Einheit das Motorgehäuse mit Abtrieb zum Pumpengehäuse und mit Versorgungs- bzw. Steuerleitungsanschluss zu dem Elektronikgehäuse;
- FIG 3: die motorgehäuseseitige Bürstenplatte mit darin fixierten, senkrecht abstehenden flachzungeriartigen Versorgungs- bzw. Steuerleitungen mit in einer Montagestellung teilweise axial aufgesteckter Isolierhülse;
- FIG 4: die Anordnung gemäß FIG 3 mit in ihre Betriebs-Verraststellung gebrachter Isolierhülse;
- FIG 5: ein horizontaler Schnitt durch die Bürstenplatte mit eingespritztem Stanzgitter;
- FIG 6: in perspektivischer Ansicht ein in die Bürstenplatte einzuspritzendes Stanzgitter mit eingstückigen, flachzungenartig abgebogenen Versorgungs- bzw. Steuerleitungen.

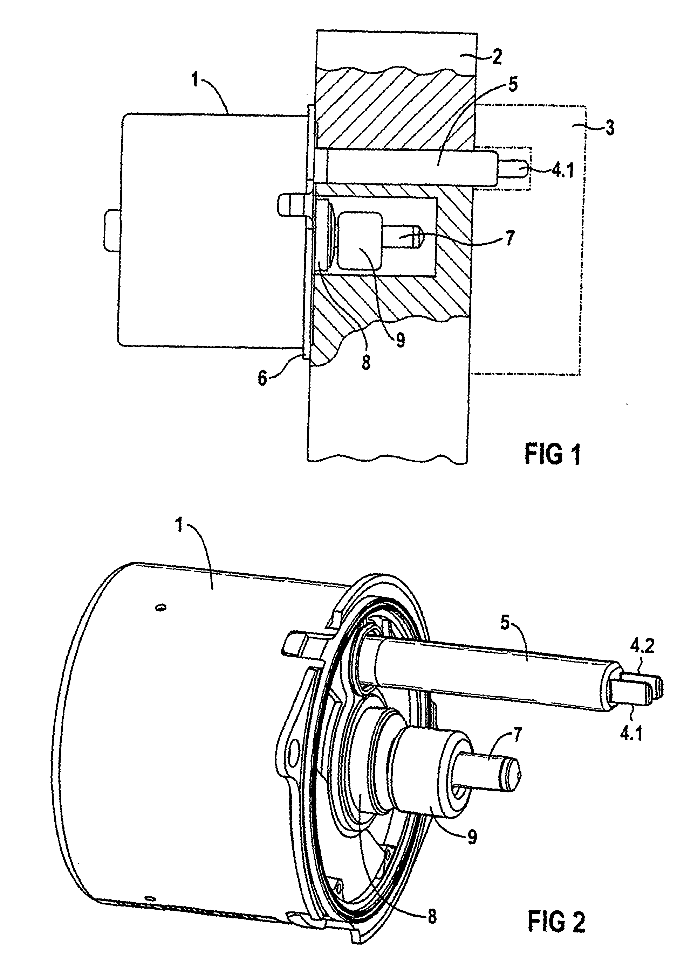

FIG 1 zeigt in einem axialen Teilschnittbild ein komplettes, z.B. für einen Kraftfahrzeug-Antiblockierbremsvorrichtung einsetzbares, Motor-Pumpen-Aggregat. An ein topfförmiges Motorgehäuse 1 eines Kommutator-Elektromotors ist mit seiner einen Stirnfläche ein Pumpengehäuse 2 einer Hochdruckpumpe für eine Brems-Hydraulikflüssigkeit abgedichtet angeflanscht; an der anderen Stirnfläche des Pumpengehäuses 2 ist ein Elektronikgehäuse 3 angebaut, das eine - hier nicht gesondert dargestellte jedoch aus der EP 0 695 875 B1 bekannte - Anschlusseinheit, insbesondere eine Versorgungs- bzw. Steuereinheit, z.B. in Form einer Leiterplatte für den Kommutator-Elektromotor aufnimmt.

Im Bereich der Topfrandseite ist das Motorgehäuse 1 durch eine Bürstenplatte 6 abgeschlossen, aus der die in einem Lager 8 gelagerte Rotorwelle 7 des Kommutator-Elektromotors mit einem Wellenende herausragt, dass einen Excenter 9 aufnimmt, von dem in hier nicht näher dargestellter, ebenfalls z.B. aus der EP 0 645 875 B1 bekannter, Art Pumpenstößel der Hochdruckpumpe angetrieben werden.

Zur elektrischen Verbindung zwischen dem Elektronikgehäuse 3 und den von der Bürstenplatte 5 aufgenommenen elektrisch Bauteilen, insbesondere Bürsten 10 dienen zungenförmige Versorgungs- bzw. Steuerleitungen 4.1;4.2 die - wie aus FIG 2 ersichtlich - im wesentlichen senkrecht zur Ebene der Bürstenplatte 6 innerhalb und durch das Pumpengehäuse 2 hindurch verlaufen und dadurch gegen äußere Einflüsse besonders leicht schützbar sind.

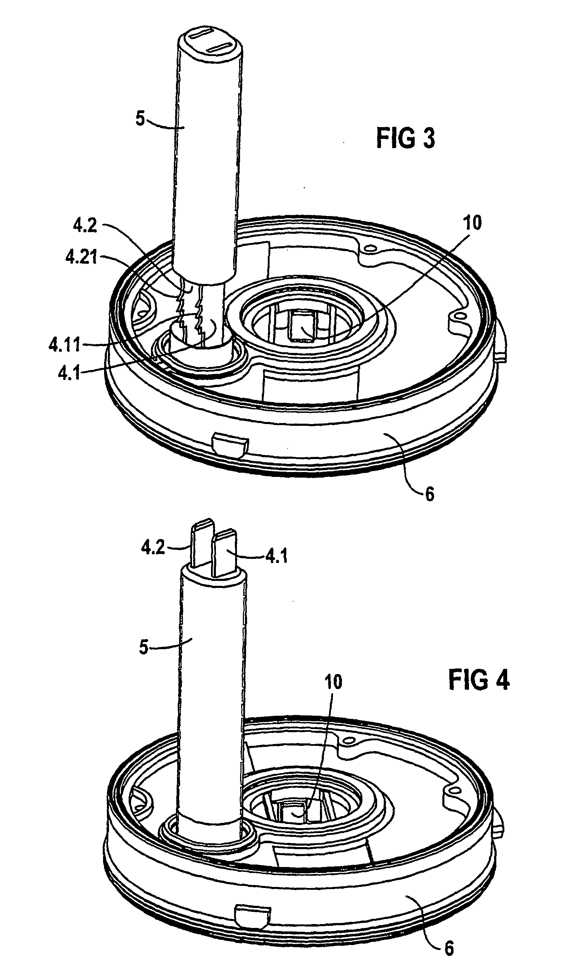

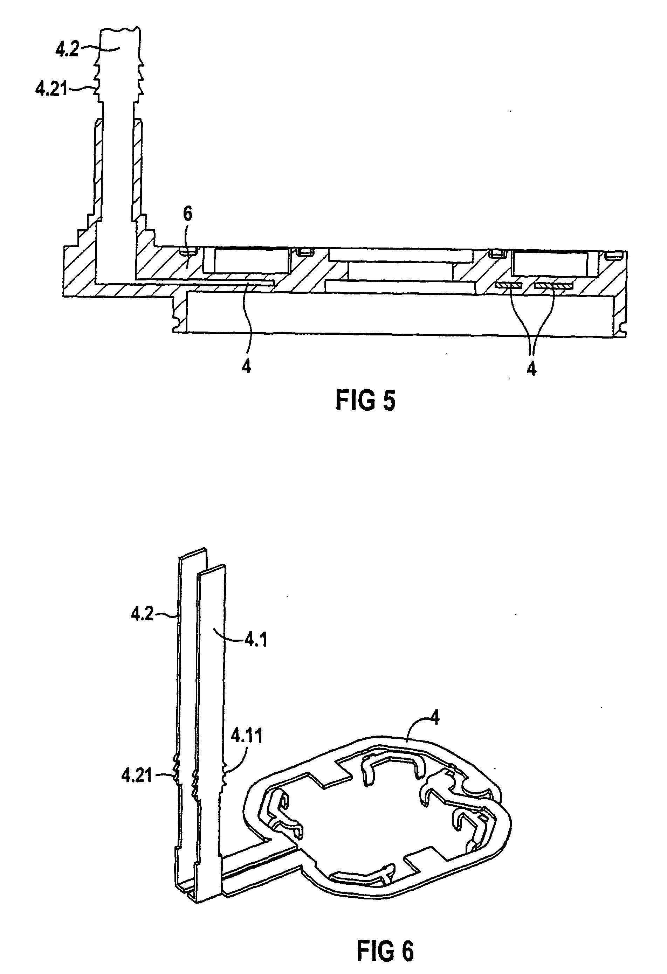

Wie aus FIG 3 bis FIG 6 ersichtlich, sind die zungenartigen Versorgungs- bzw. Steuerleitungen 4.1;4.2 im Sinne einer Vormontage-Baueinheit mit ihren motorgehäuseseitigen Enden in der Bürstenplatte 6 fixiert, insbesondere in Form einer Einstückigkeit mit einem in die Bürstenplatte 6 eingespritzten Stanzgitter 4, das in an sich bekannter Art zum Anschluss der von der Bürstenplatte 5 aufgenommenen Bauelemente dient und von dem die zunächst in der Ebene des Stanzgitters 4 mitgestanzten zungenartigen Versorgungs- bzw. Steuerleitungen 4.1;4.2 - wie aus FIG 6 ersichtlich - abgebogen sind.

Zur elektrischen Isolierung der Versorgungs- bzw. Steuerleitungen 4.1;4.2 ist eine elastische, z.B. gemäß FIG 3 axial aufsteckbare und durch Verrastungen 4.11;4.21 in ihrer Betriebsstellung gemäß FIG 4 durch Verrasten fixierbare Isolierhülse 5 derart vorgesehen, dass die motorgehäuseabgewandten Enden beim Sandwich-Zusammenbau von Motorgehäuse 1, Pumpengehäuse 2 und Elektronikgehäuse 3 trotz möglichen gegenseitigen Versatzes der zusammenzubauenden Gehäuseteile toleranzausgleichend quer zu ihrer axialen Erstreckungsrichtung ausweichen können und dadurch eine dichte Durchführung durch die Gehäusestirnflächen gewährleistbar und mechanische Spannungsbelastungen vermeidbar sind.

Der grundsätzliche Erfindungsgedanke kann wie folgt zusammengefasst werden:

Trotz axialem Sandwich-Zusammenbau von Motorgehäuse (1), Pumpengehäuse (2) und Elektronikgehäuse (3) ist bei einfacher Fertigungs- und Montagetechnik eine verspannungsfreie Steckerverbindung mit Versorgungs- bzw. Steuerleitungen (4.1;4.2) zwischen einer Bürstenplatte (6) in dem Motorgehäuse (1) durch das Pumpengehäuse (2) hindurch zu dem Elektronikgehäuse (3) dadurch möglich, dass die Versorgungs- bzw. Steuerleitungen (4.1;4.2) feststeckerartig mit ihren motorgehäuseseitigen Enden als Vormontage-Bauteileinheit in der Bürstenplatte (5), insbesondere als abgebogener einstückiger Teil eines darin eingespritzten Stanzgitters (4), fixiert, jedoch mit ihren freien Steckerenden, von einer elastischen Isolierhülse umgeben, quer zu ihrer axialen Eingangserstreckung toleranzausgleichend elastisch wegbiegbar sind.

## Patentansprüche

1. Motor-Pumpen-Aggregat, insbesondere Kraftfahrzeug-Antiblockierbremsvorrichtung, enthaltend in axialer Sandwich-Hintereinanderanordnung ein Motorgehäuse (1), ein Pumpengehäuse (2) und ein Elektronikgehäuse (3) mit den Merkmalen:
- Von dem Motorgehäuse (1) führen zumindest zwei gegeneinander elektrisch isolierte steckerartige Versorgungsoder Steuerleitungen (4.1;4.2) durch das Pumpengehäuse hindurch zu dem Elektronikgehäuse (3);
- die steckerartigen Versorgungs- oder Steuerleitungen (4.1;4.2) sind motorgehäuseseitig in einem Sockel, insbesondere in einer Bürstenplatte (6), fest fixiert und im übrigen quer zu ihrer Längserstreckung zumindest im Sinne von Toleranzausgleichungen frei beweglich;
- die steckerartigen Versorgungs- oder Steuerleitungen (4.1;4.2) sind Teile, insbesondere einstückige abgebogene Biegestanzteile, eines von dem Sockel, insbesondere der Bürstenplatte (6), aufgenommenen Stanzgitters (4);
- für zumindest zwei, vorzugsweise parallel zueinander verlaufende, Versorgungs- oder Steuerleitungen (4.1; 4.2) ist eine gemeinsame elastische Isolierhülse (5) vorgesehen;
- die elastische Isolierhülse (5) ist als Vorfertigteil auf die steckerartigen Versorgungs- bzw. Steuerleitungen (4.1;4.2), insbesondere von deren freien, dem Elektronikgehäuse (3) zugewandten Enden her, aufgesteckt, und
- die aufgesteckte Isolierhülse (5) ist in ihrer Betriebsendlage durch Verrasten mit Verrastungen (4.11; 4.21) der steckerartigen Versorgungs- bzw. Steuerleitungen (4.1;4.2) fixiert.

2. Motor-Pumpen-Aggregat nach Anspruch 1 mit dem Merkmal:
- Die steckerartigen Versorgungs- oder Steuerleitungen (4.1;4.2) sind als Flachstecker-Zungen ausgebildet und quer zu ihrer Längserstreckung toleranzausgleichend elastisch wegbiegbar.

3. Motor-Pumpen-Aggregat nach Anspruch 1 und/oder 2 mit dem Merkmal:
- Die steckerartigen Versorgungs- oder Steueranschlüsse (4.1;4.2) sind mit dem Motorgehäuse (1) abgewa:idten freien Enden mit einer Elektronikeinheit in dem Elektronikgehäuse (3), insbesondere einer Leiterplatte, kontaktierbar, vorzugsweise steckkontaktierbar.

4. Motor-Pumpen-Aggregat nach zumindest einem der vorhergehenden Ansprüche mit dem Merkmal:
- Die in die Isolierhülse (5) eingebetteten steccerartigen Versorgungs- oder Steuerleitungen (4.1;4.2) sind durch die voreinanderliegenden Stirnflächen von Motorgehäuse/Pumpengehäuse bzw. Pumpengehäuse/Elektronikgehäuse hindurch und jeweils innengehäuseseitig verlegt.

5. Motor-Pumpen-Aggregat nach zumindest einem der Ansprüche 1-3 mit dem Merkmal:
- Die in die Isolierhülse (5) eingebetteten steckerartigen Versorgungs- oder Steuerleitungen (4.1;4.2) sind außengehäuseseitig zu dem Pumpengehäuse (2) verlegt.

6. Motor-Pumpen-Aggregat nach zumindest einem der vorhergehenden Ansprüche mit dem Merkmal:
- Die Versorgungs- oder Steuerleitungen (4.1;4.2) sind beim Zusammenbau von mit der Bürstenplatte (6) vorbestücktem Motorgehäuse (1) mit dem Pumpengehäuse (2) und mit dem Elektronikgehäuse (3) mit dessen Anschlussteil zwangskontaktierbar.

## Claims

1. A motor-pump assembly, in particular an anti-lock braking system for a motor vehicle, containing in an axial sandwich arrangement in series a motor housing (1), a pump housing (2) and an electronics housing (3), **characterised in that**:
- at least two plug-in type power supply or control conductors (4.1;4.2) lead, electrically insulated from one another, from the motor housing (1) through the pump housing to the electronics housing (3);
- the plug-in type power supply or control conductors (4.1;4.2) are firmly fixed on the motor housing side in a socket, in particular in a brush plate (6), and in other respects freely movable in a transversal direction to the direction of their longitudinal extension at least for the purposes of compensating tolerances;
- the plug-in type power supply or control conductors (4.1;4.2) are parts, in particular one-piece, bent bending-die-punched parts of a stamped grid (4) held by the socket, in particular the brush plate (6);
- a shared elastic insulating jacket (5) is provided for at least two power supply or control conductors (4.1;4.2), preferably running parallel to one another,
- the elastic insulating jacket (5) can be slipped as a prefabricated part on to the plug-in type power supply and control conductors (4.1;4.2), in particular from their free ends facing towards the electronics housing (3), and
- the slipped-on insulating jacket (5) is fixed in its ultimate operating position by latching with latches (4.11;4.21) of the plug-in type power supply and control conductors (4.1;4.2)

2. A motor-pump assembly according to Claim 1, **characterised in that**
- the plug-in type power supply or control conductors (4.1;4.2) are fashioned as flat-connector tabs and can be elastically bent away in a transversal direction to the direction of their longitudinal extension in order to compensate tolerances.

3. A motor-pump assembly according to Claim 1 and/or Claim 2, **characterised in that**
- the plug-in type power supply or control conductors (4.1;4.2) can, with their free ends facing away from the motor housing (1), be contacted, preferably plug-contacted, with an electronic unit in the electronics housing (3), in particular a printed-circuit board.

4. A motor-pump assembly according to at least one of the preceding claims, **characterised in that**
- the plug-in type power supply or control conductors (4.1;4.2) embedded in the insulating jacket (5) are laid through the faces, lying in front of one another, of motor housing / pump housing and pump housing / electronics housing and on the inside of each housing.

5. A motor-pump assembly according to at least one of Claims 1-3, **characterised in that**
- the plug-in type power supply and control conductors (4.1;4.2) embedded in the insulating jacket (5) are, in relation to the pump housing (2), laid on the outside of the housing.

6. A motor-pump assembly according to at least one of the preceding claims, **characterised in that**
- the power supply or control conductors (4.1;4.2) can, when the motor housing (1) pre-equipped with the brush plate (6) is assembled with the pump housing (2) and with the electronics housing (3), be forcibly contacted with the terminal of said electronics housing.

## Revendications

1. Groupe moteur-pompe, en particulier système de freinage antiblocage pour véhicule automobile, comprenant en disposition axiale l'un dernière l'autre, en sandwich, un carter-moteur (1), un carter de pompe (2) et un boîtier électronique (3) ayant comme caractéristiques :
- à partir du carter-moteur (1 ), au moins deux conduites d'alimentation ou de commande (4.1 ; 4.2) du type connecteurs, isolées électriquement l'une par rapport à l'autre, conduisent à travers le carter de pompe jusqu'au boîtier électronique (3) ;
- les conduites d'alimentation ou de commande (4.1 ; 4.2) du type connecteurs, sont fixées côté carter-moteur solidairement dans un socle, en particulier dans une plaque porte-balais (6) et, par ailleurs, librement mobiles perpendiculairement à leur étendue longitudinale, au moins dans le but de compenser les tolérances ;
- les conduites d'alimentation ou de commande (4.1 ; 4.2) du type connecteurs sont des parties, en particulier des parties estampées cintrées en une pièce, d'un grillage estampé (4) logé par le socle, en particulier par la plaque porte-balais (6), une gaine isolante (5) élastique commune étant prévue pour au moins deux conduites d'alimentation ou de commande (4.1 ; 4.2) disposées de préférence parallèlement l'une par rapport à l'autre ;
- la gaine isolante (5) élastique est posée, en tant que pièce préfabriquée, sur les conduites d'alimentation ou de commande (4.1 ; 4.2) du type connecteurs, en particulier à partir de leurs extrémités libres, tournées vers le boîtier électronique (3) ;
- la gaine isolante (5) posée est fixée, dans sa position terminale de fonctionnement, par enclenchement par des crans (4.11 ; 4.21) des conduites d'alimentation et de commande (4.1 ; 4.2) du type connecteurs.

2. Groupe moteur-pompe selon la revendication 1, ayant comme caractéristique :
- les conduites d'alimentation ou de commande (4.1 ; 4.2) du type connecteurs sont configurées en tant que languettes constituant des connecteurs plats et peuvent être pliées élastiquement, perpendiculairement à leur étendue axiale d'entrée, en compensant les tolérances.

3. Groupe moteur-pompe selon la revendication 1 et/ou 2, ayant comme caractéristique :
- les conduites d'alimentation ou de commande (4.1 ; 4.2) du type connecteurs sont mises en contact, par leurs extrémités libres opposées au carter-moteur (1), avec une unité électronique dans le boîtier électronique (3), en particulier avec une carte de circuits imprimés, de préférence mises en contact par enfichage.

4. Groupe moteur-pompe selon au moins l'une des revendications précédentes, ayant comme caractéristique :
- les conduites d'alimentation ou de commande (4.1 ; 4.2) du type connecteurs logées dans la gaine isolante (5) sont posées à travers les surfaces frontales situées les unes devant les autres du carter-moteur/ carter de pompe ainsi que du carter de pompe/boîtier électronique et respectivement côté intérieur des carters.

5. Groupe moteur-pompe selon au moins l'une des revendications 1-3, ayant comme caractéristique :
- les conduites d'alimentation ou de commande (4.1 ; 4.2) du type connecteurs logées dans la gaine isolante (5) sont posées côté extérieur par rapport au carter de pompe (2).

6. Groupe moteur-pompe selon au moins l'une des revendications précédentes, ayant comme caractéristique :
- les conduites d'alimentation ou de commande (4.1 ; 4.2), au moment de l'assemblage du carter-moteur (1), préalablement équipé de la plaque porte-balais (6), avec le carter de pompe (2) et avec le boîtier électronique (3), viennent obligatoirement en contact avec la pièce de connexions de celui-ci.
